# EUROPEAN PATENT SPECIFICATION

(11) **EP 1 816 530 B1**
(45) Date of publication and mention of the grant of the patent: **04.08.2010**
(21) Application number: 07002308.0
(22) Date of filing: 02.02.2007
(51) Int. Cl.: G05B 19/05, G05B 19/042, H04L 29/06

(54) **Extending industrial control system communications capabilities**
Erweiterung der Kommunikationsfähigkeiten von Industriereglersystemen
Extension des capacités de communication d'un système de contrôle industriel

(30) Priority: 03.02.2006 US 347417
(43) Date of publication of application: 08.08.2007
(73) Proprietor: Rockwell Automation Technologies, Inc., Mayfield Heights, OH 44124 (US)
(72) Inventor: Hall, Kenwood H., Hudson, OH 44236 (US); Tutkovics, Scot A., Aurora, OH 44202 (US); Vasko, David A., Solon, OH 44139 (US); Batke, Brian A., Novelty, OH 44072 (US); Callaghan, David M., Kirkland, WA 98033 (US)
(74) Representative: Grünecker, Kinkeldey, Stockmair & Schwanhäusser Anwaltssozietät

(56) References cited:
- US-A1- 2003 014 536
- US-A1- 2003 195 975
- US-A1- 2004 054 829
- US-A1- 2005 256 964
- MICHAEL VOLZ: "Quo vadis industrial ethernet ?"[Online] August 2001 (2001-08), pages 1-4, XP002435370 ISA Retrieved from the Internet: URL:http://www.isa.org/InTechTemplate.cfm? Section=Article_Index1&template=/ContentMa nagement/ContentDisplay.cfm&ContentID=709> [retrieved on 2007-05-24]

## Description

### TECHNICAL FIELD

The subject invention relates generally to industrial control systems, and more particularly to systems and methods that enable communications and communications performance to extend beyond standard protocol boundaries for industrial control systems.

### BACKGROUND

Industrial controllers are special-purpose computers utilized for controlling industrial processes, manufacturing equipment, and other factory automation, such as data collection or networked systems. At the core of the industrial control system, is a logic processor such as a Programmable Logic Controller (PLC) or PC-based controller. Programmable Logic Controllers for instance, are programmed by systems designers to operate manufacturing processes via user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. Differences in PLCs are typically dependent on the number of Input/Output (I/O) they can process, amount of memory, number and type of instructions, and speed of the PLC central processing unit (CPU).

In recent years, there has been a growing need to integrate industrial control systems across a plurality of different types of networks and protocols while maintaining communications performance of smaller or more-proprietary systems. One problem here is that often times a desired communication interface and required communications services do not match. For code compatibility, it may be desirable to use an existing industrial protocol interface, yet there is a need for higher level services, such as gateway functions, multicast or time synchronization, which generally are not available. In many cases, either the communication service interface need to be changed to a more full featured protocol or the existing protocol need be enhanced to support the required features.

Along with communicating on a desired network, consider the situation where a PLC desires to implement connectivity via an industrial network protocol. Newer protocols such as EtherNet/IP have a rich set of application-level objects as well as complex network protocol layers. A PLC implementing EtherNet/IP connectivity will find it useful to include application layer features (application objects). However, it is desirable not to require the PLC processor to implement the entire EtherNet/IP network layer. There are several current methods in which industrial protocol support is implemented in PLCs. Existing EtherNet/IP implementations, for example, generally implement the network and application layers in the PLC itself, using the backplane between the PLC and Network Interface Module as a network hop. For older and simpler protocols, PLCs often use a dual-port or memory-map interface between the PLC and Network Interface Module to transport the actual industrial protocol packets.

In one example of a previous industrial communications protocol, a Data Highway (DH) and Data Highway Plus (DH+) protocol have been employed to enable remote communications between a given PLC module and one or more remote communications devices. These protocols are generally associated with PCCC protocols which stand for "Programmable Controller Communications Code. In some cases, these protocols have been used to control remote I/O devices operating in remote I/O racks. One example for achieving such control and communications has been to utilize what is known as a pass-thru function where remote I/O commands are sent though a DH or DH+ communications packet. In other words, a remote I/O command may be transported within a respective DH or DH+ communications command to control remote I/O functions. Although this type of communications has been successful in the past, it is noted that remote I/O protocols and the DH/DH+ protocols are related by a common industrial protocol. There is a need however to communicate between devices that employ non-related or disassociated industrial protocols.

The document US 2004/0054829 A1 discloses a method facilitating communication within an automation system having a plurality of networks and network protocols. Specifically, a Modbus network is operably connected to a network. A fieldbus coupler operably connected to both networks having a program facilitates communication within the automation system wherein devices connected to the network can be accessed for monitoring and/or controlling via Modbus commands. The fieldbus coupler (FBC) program accepts a Modbus function code containing one or more embedded message of varying types. The FBC program using additional information contained in the Modbus function code and the message type reads or writes only the required information to and from the field devices. This specific read or write request of the information and the embedding of more than one message type reduces overhead and bandwidth usage, thus improving bus response time and efficiency.

The article from Michael Volz: "Quo vadis industrial Ethernet?" [Online] August 2001, pages 1-4, XP002435370 discloses a short overview of the use of Ethernet and the TCP/IP in industrial automation technology. Encapsulation technologies allow a more or less unchanged fieldbus telegram embedded as user data in a TCP/UDP frame transmitting over the Ethernet.

It is the object of the present invention to provide an automation and communications system providing an improved manner for using a controller component for communicating using a plurality of unrelated network protocols, as well as a corresponding computer-readable medium and method.

This object is solved by the subject matter of the independent claims.

Preferred embodiments are defined by the dependent claims.

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

Multi-functional communications components and processes are provided that facilitate industrial control system communications across a plurality of differing network protocols. In one aspect, an industrial control communications component is provided that can reside as a separate entity or within a control system module itself. This includes the capability to encapsulate at least one industrial protocol within another industrial protocol, where the protocols are unrelated or disassociated from one another in order to facilitate communications between differing communications systems. In one specific example, a first protocol could act as a payload for one or more subsequent protocols, where the subsequent protocols are unrelated to the first protocol. In this manner, an "outside of network" device could be added to an existing network where commands to the respective device are carried across the existing network yet specified or encapsulated within existing network protocols. This also mitigates having to redesign existing protocols and systems to accommodate new or foreign industrial protocols since the new protocols can be payload-ed on top of or within an unrelated industrial protocol.

In general, differing industrial protocols are considered as at least one open industry standard protocol (e.g., Control and Information Protocol) that operates as a payload for at least one other open industry standard protocol (e.g., MODBUS), where specifications for such protocols are readily available. In another aspect, a protocol interface can be provided where application layer functionality is distributed across modules in order to mitigate communications burdens on critical control elements such as controllers. In yet another aspect, converter components can be provided that maps one type of network protocol to one or more other network protocols. The communications component can also facilitate communications by providing multiple communications stacks that process communications from divergent networks and protocols.

In one particular aspect, a communications or control component encapsulates one industrial protocol within another unrelated industrial protocol. The communication interface of the encapsulated protocol can remain similar in nature to prior interface implementations to mitigate re-design, yet provide expanded services of the encapsulating protocol which is added to existing communications infrastructure. For example, a MODBUS protocol could be encapsulated within a separate industrial Control and Information (CIP) protocol to facilitate communications between these differing network protocols.

In another aspect, network overhead for a module is mitigated by distributing network layer functionality across module boundaries. For instance, application objects that are appropriate for a programmable logic controller (PLC) are able to be implemented in the PLC. A Network Services Layer exposes network layer communication primitives to the application objects as if a network protocol stack was implemented on the PLC itself. As such, whether the stack is on the PLC or on an associated Network Interface Module, the stack is substantially transparent to the application layer which allows for sharing resources across modules without overburdening a particular module.

In yet another aspect, a protocol converter can be provided that maps protocol differences in a substantially transparent manner. This enables communications in one protocol to be mapped to a subsequent network protocol while mitigating design changes to existing protocols. In another aspect, multi-level communications capabilities can be provided for a given module. For instance, there are several Industrial Ethernet protocols such as Ethernet/IP, MODBUS TCP and ProfiNet. Multiple communications protocol stacks can be provided to enable products that are able to communicate to these various protocols such that a single product could provide Ethernet (or other protocol) connectivity for multiple protocols.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

Fig. 1 is a schematic block diagram illustrating industrial control system network communications.

Fig. 2 is a diagram illustrating an example protocol encapsulation component.

Fig. 3 is a diagram illustrating network communications with encapsulated protocols in an industrial controller network.

Fig. 4 is a diagram illustrating a network services interface system.

Fig. 5 is a diagram illustrating an automation device or component for performing network conversions.

Fig. 6 is a diagram illustrating a listing of example communications services that can be employed with automation devices.

Fig. 7 is a diagram illustrating a multiple stack architecture for communications between network systems.

Fig. 8 is a diagram illustrating an example stack structures for processing industrial communications.

Fig. 9 is a flow diagram illustrating a process for handling multiple industrial protocols.

### DETAILED DESCRIPTION

Systems and methods are provided for communications across multiple networks in a substantially transparent and seamless manner. In one aspect, an industrial automation system is provided. The system includes a communications component to facilitate communications in an industrial controller network, where the communications component can include a protocol encapsulation component, a network services interface, or a protocol converter to process multiple network protocols. A controller component employs at least one network protocol to communicate with at least one other network protocol via the communications component. Also, the communications component can include multiple communications stacks to facilitate communications with the multiple network protocols.

It is noted that as used in this application, terms such as "component," "stack," "protocol, " "converter," "interface," and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process and/or thread of execution and a component may be localized on one computer and/or distributed between two or more computers, industrial controllers, and/or modules communicating therewith.

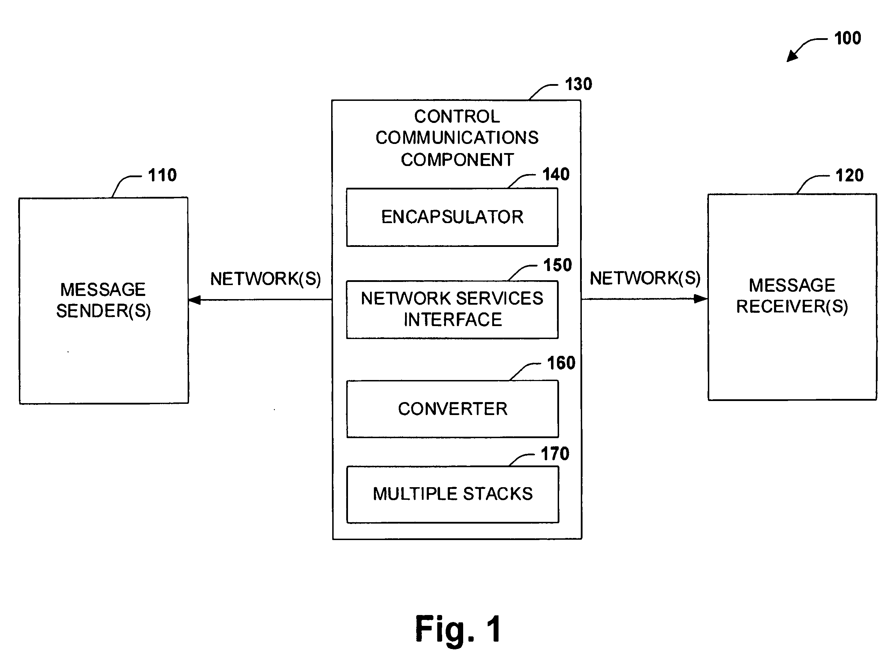

Referring initially to Fig. 1, a system 100 illustrates industrial control communications between networks. The system 100 includes one or more message senders 110 that communicate to one or more message receivers via a plurality of network protocols. A communications component 130 is provided to facilitate communications between network protocols. The communications component 130 may employ one or more components to enable communications between the message senders 110 and receivers 120. These may include an encapsulation component 140 having the capability to encapsulate one protocol within another protocol in order to facilitate communications between differing network or industrial control protocols. A network services interface 150 can be provided where application layer or stack functionality is distributed across modules in order to mitigate communications burdens on control elements such as programmable logic controllers (PLCs). A protocol converter component 160 can also be provided with the communications component 130 that maps one type of network protocol to one or more other network protocols in a substantially seamless manner. The communications component 130 can also facilitate industrial control communications by providing multiple communications stacks 170 that process communications from divergent networks. It is noted that the protocol converter component 160 can perform various communications conversions such as converting all or portions of an industrial protocol to a computer data protocol such as into an extensible markup language XML, for example. Such conversions can be employed to transport data from lower level control systems to higher level data collections systems and *visa versa.*

In general, the encapsulation component 130 transports data by wrapping one industrial protocol within another unrelated industrial protocol. The communication interface of the encapsulated protocol can remain similar in nature to existing interface designs in order to mitigate component re-designs, yet provide expanded services of the encapsulating protocol which is added to existing communications infrastructure. For example, a MODBUS protocol could be encapsulated within a Control and Information (CIP) protocol to facilitate communications between these differing network protocols. As can be appreciated, a plurality of protocols can be employed to encapsulate a subsequent protocol or to be transported within an encapsulation protocol. For instance, CIP protocols can be encapsulated in DeviceNet or Ethernet protocols and be adapted to operate as a payload for one or more other industry protocols that are of a different or unrelated protocol from the underlying CIP protocol. In general, a payload protocol configured for an industrial protocol is an open industry protocol specifications of which are available to the public. Within the respective payload, one or more unrelated yet open industry protocols can be embedded in the payload. These unrelated protocols to the payload are then transported across a common network yet are employed to serve as a gateway for communications functions between devices that employ differing industry standard protocols. The payload architecture also promotes future communications extensibility since future industry standard protocols can be subsequently embedded or payload-ed within or on top of existing industrial communications protocols.

In another aspect, network overhead for a module can be mitigated by distributing network layer functionality across module boundaries. For example, application layer objects that are suitable for a PLC can be implemented in the PLC. The Network Services Layer 150 exposes network layer communication primitives to the application objects as if a network protocol stack was implemented on the PLC itself or in this case the communications component 130. As such, whether the stack is on the PLC or on an associated Network Interface Module, the stack is substantially transparent to the application layer which allows for sharing resources across modules without overburdening a respective industrial control system module.

The protocol converter 160 maps protocol differences in a substantially transparent manner. This enables communications in one protocol to be mapped to a subsequent network or industrial protocol while mitigating design changes to existing protocols. In another aspect, multi-level communications capabilities can be provided for a given module. For instance, there are several Industrial Ethernet protocols such as Ethernet/IP, MODBUS TCP and ProfiNet. Multiple communications protocol stacks 170 can be provided to enable modules to communicate to these various protocols such that a single product can provide Ethernet (or other protocol) connectivity for multiple other protocols.

Before proceeding, it is noted that the system 100 can include various computer or network components such as servers, clients, communications modules, mobile computers, wireless components, Application Oriented Infrastructure (AON) type devices, application and integration servers, message brokers, and so forth which are capable of interacting across the network. Similarly, the term PLC as used herein can include functionality that can be shared across multiple components, systems, and/or networks. For example, one or more PLCs can communicate and cooperate with various network devices across the network. This can include substantially any type of control, communications module, computer, I/O device, Human Machine Interface (HMI)) that communicate *via* the network which includes control, automation, and/or public networks. The PLC can also communicate to and control various other devices such as Input/Output modules including Analog, Digital, Programmed/Intelligent I/O modules, other programmable controllers, communications modules, and the like. The network can include public networks such as the Internet, Intranets, and automation networks such as Control and Information Protocol (CIP) networks including DeviceNet and ControlNet. Other networks include Ethernet, DH/DH+, Remote I/O, Fieldbus, MODBUS, Profibus, Web Services, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

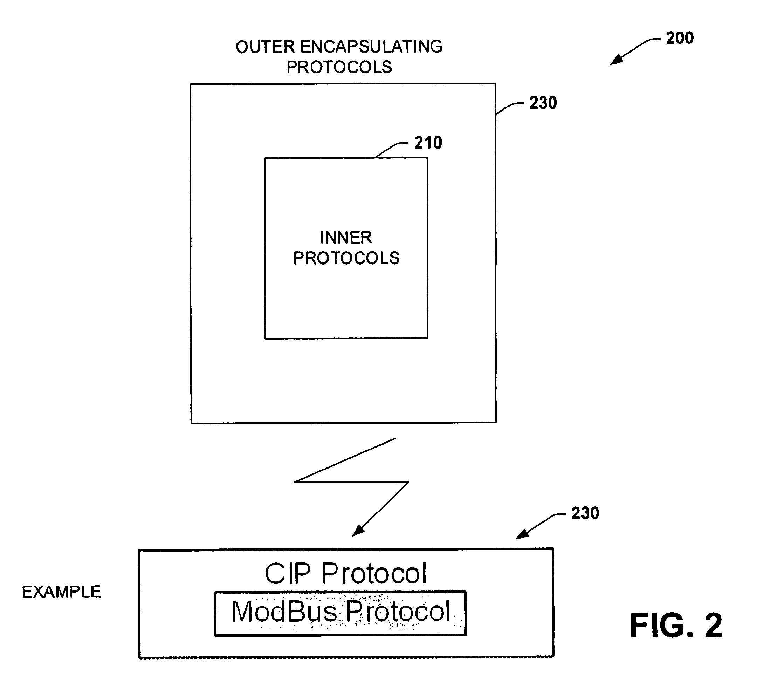

Referring now to Fig. 2, a protocol encapsulation component 200 is illustrated. In order to facilitate communications between systems and mitigate re-design of existing systems, one or more industrial protocols can be encapsulated within another unrelated industrial protocol. This is illustrated at 210 where one or more protocols defined as an inner protocol can be encapsulated or embedded within an outer or wrapper protocol 220. This enables the communication interface for the encapsulated protocol to remain the same, but expand services of the encapsulating protocol are added. For example, MODBUS protocol could be encapsulated within a control and information (CIP) protocol as illustrated at 230. Thus, the interface to the end nodes in a communication can remain consistent (e.g., MODBUS), but transport services provide additional features such as a gateway function, high integrity transmission or time synchronization. It is to be appreciated that substantially any industrial or network protocol can be employed as the inner or outer protocols, 210 and 220 respectively - and *visa versa.*

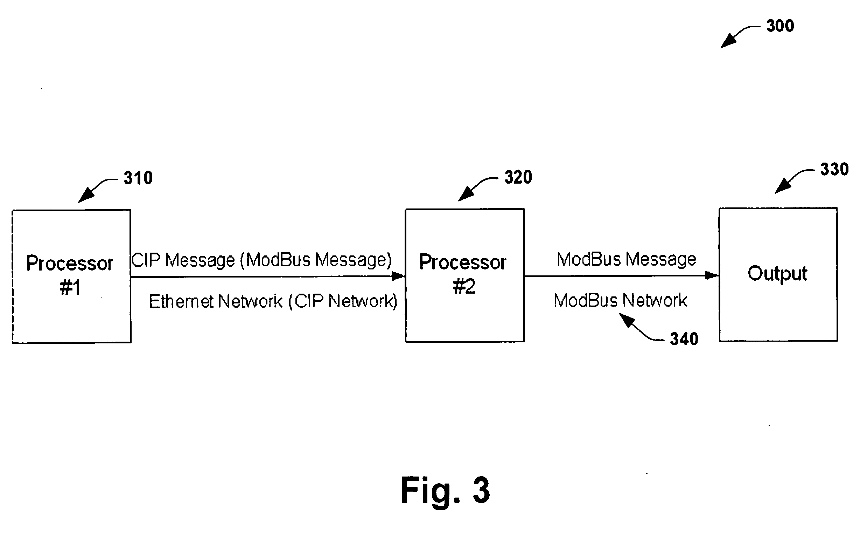

Turning to Fig. 3, an example system 300 illustrates communications with encapsulated protocols. Protocol encapsulation described above with respect to Fig. 2 can be performed in an end node or in an intermediate node, if desired. In the system 300, a processor 310 encapsulates a MODBUS message (or other inner protocol) within a CIP message (or other outer protocol) for transmission. This encapsulated message is sent to a subsequent processor 320 using CIP protocol, where the MODBUS message is stripped from the CIP message and sent to a MODBUS Output Device 330 which resides on a MODBUS Network 340. One advantage of the industrial protocol encapsulation process is that additional communication services can be added to a message transmission with minimal impact to an existing communication protocol interface. It is to be appreciated that more than industrial control components can be employed than the components illustrated in the system 300.

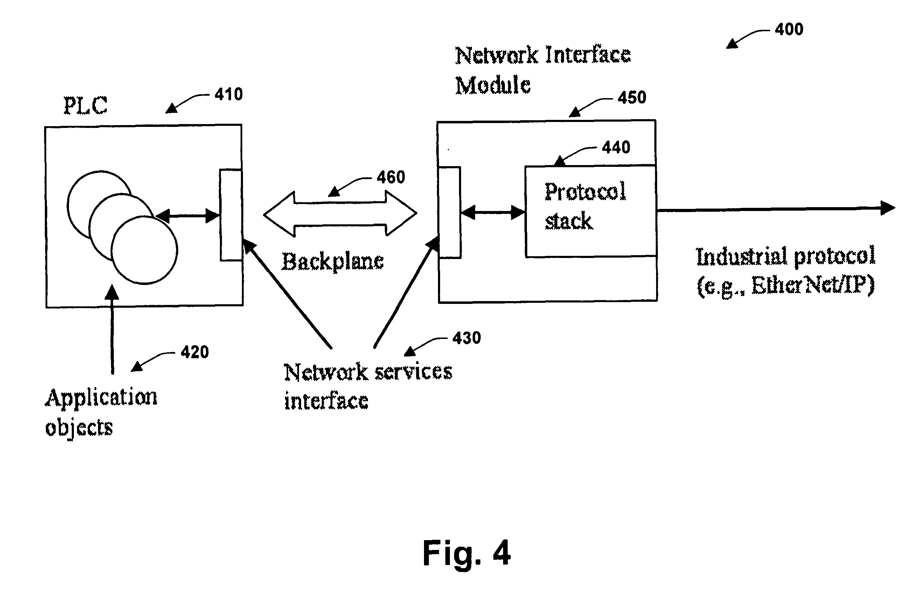

Fig. 4 illustrates a network services interface system 400. In general, it is desirable for a PLC 410 to implement network connectivity via an industrial network protocol. Newer protocols such as EtherNet/IP have a rich set of application-level objects as well as complex network protocol layers. Thus, a PLC implementing EtherNet/IP connectivity (or other network) will find it useful to include application layer features (application objects). However, it is desirable not to require the PLC processor 410 to implement the entire EtherNet/IP network layer. The system 400 provides a network services interface 430 that allows the PLC processor 410 to have knowledge of the industrial protocol's application level, and take advantage of the protocol's network services, without having to implement the network layer of the industrial protocol.

In the system 400, the Application Objects 420 that are suitable for the PLC are implemented in the PLC 410. The Network Services Layer 430 exposes the network layer communication primitives to the Application Objects 420, as if the network protocol stack was implemented on the PLC itself. As such, whether a stack 440 is on the PLC or provided on an associated Network Interface Module 450, the stack is therefore substantially transparent to the application layer. The Network Services Interface 430 can be provided via an applications programming interface (API), remote procedure call, transparent inter-process communication (TIPC) or other mechanism that models the interface to the network stack without generally requiring industrial protocol communications itself to be transported over a backplane 460.

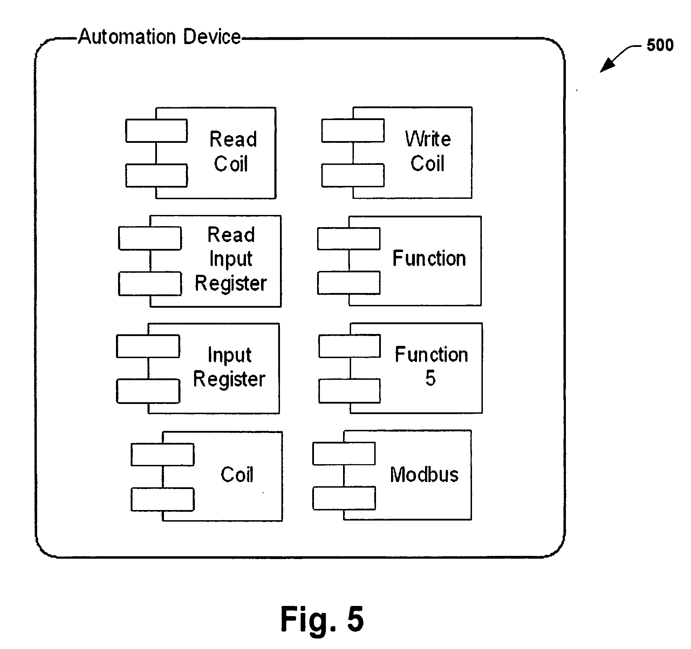

Fig. 5 illustrates an example automation device or component 500 for performing network conversions. In general, a protocol (e.g., MODBUS) and data model can be mapped to a subsequent protocol such as a native control and information (CIP) implementation, for example. Thus in this example, existing MODBUS interfaces and data can be provided as CIP objects, services, and data. The device 500 presents a software component view of a typical automation device which presents its hardware and software features through network interfaces. These software features are normally accessed via the MODBUS protocol can be mapped to the control and information protocol (CIP) objects and web services. However, it is noted MODBUS messages can also be wrapped with CIP interfaces and with standard web services.

By employing data mapping processes, remote device and software tools can communicate with another devices data model, without having to understand the transport mechanism used. It is rapidly becoming a standard practice for developers to focus on the value add of the application instead of the proprietary communication mechanisms. The features shown in the component 500 can be considered offered by a CIP based device or a gateway device as web services. As illustrated, the automation device can include read coil functionality, write coil functionality, read input register functionality, a function component, an input register component, a function 5 component, a coil component, and a MODBUS component, for example.

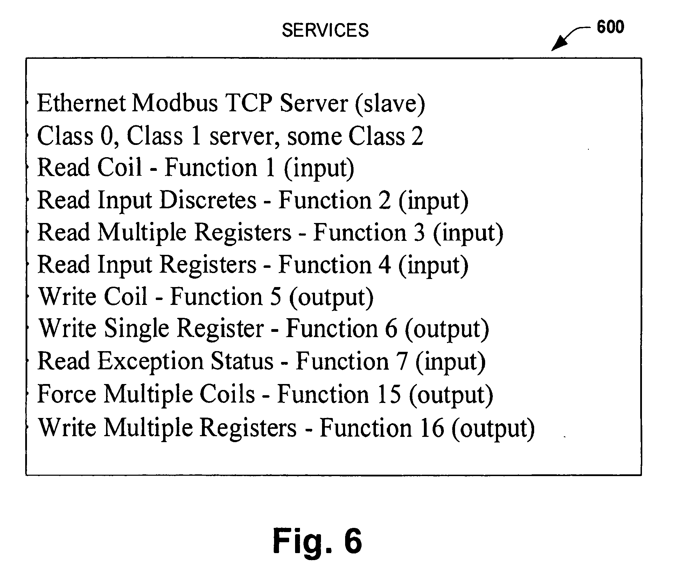

Fig. 6 provides a listing of example communications services 600 that can be employed with the automation device 500 described above. In general, MODBUS protocol - here the generic family of MODBUS protocol messages can be mapped to a CIP object that presents that functionality. MODBUS protocol generally provides function services. For example Function 1 = Read Coil, Function 2 = Read Input Discretes, and so forth. Thus, a MODBUS object may have CIP services called "Function 1", or "Read Coil," for example. There can be various permutations of mapping between MODBUS messaging protocols into a CIP data model.

In another aspect, a MODBUS service can be mapped to a CIP object. For instance, Read Coil - a CIP object "Read Coil" is implemented to receive a similar type of parameters that a MODBUS TCP message would have received except it is mapped to data of a CIP server such as set attribute all, or read, for example. For Read Input Register, or Input Register or Register (not shown), there are MODBUS commands provided to read a register. It is possible to present the same object or data model via CIP as was done via MODBUS. Therefore other permutations are possible in this aspect. Here both a Register object that receives input read commands, or a Read Input Register receives get attribute commands, or a generic Register object receives read or read_register service requests. Similarly, the functions of MODBUS protocol may be mapped to a generic Function Object that has service 1, service 2 and so forth, or a CIP get/set read/write that includes a function code in the respective CIP message data.

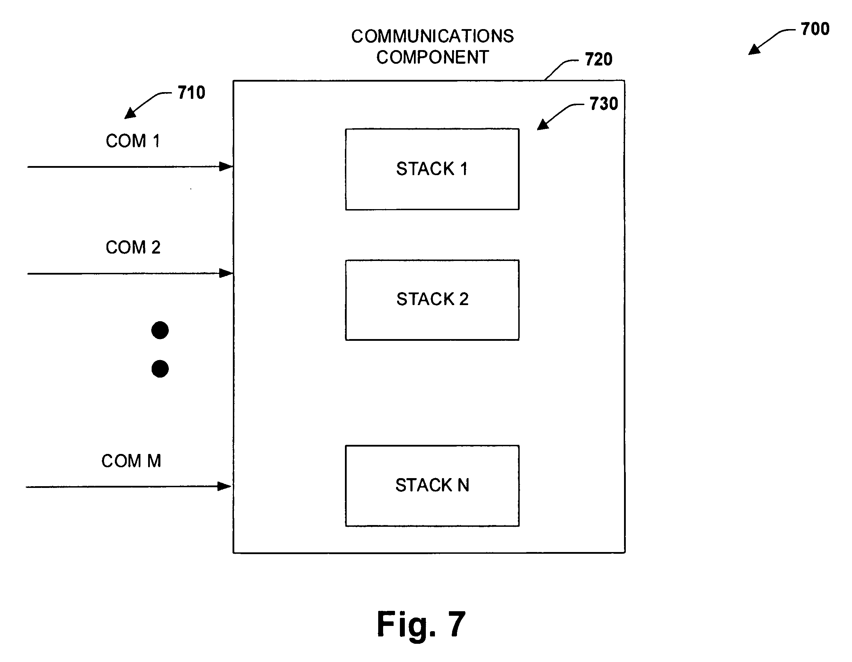

Fig. 7 illustrates a multi-stack architecture 700 for communications between network systems. In this aspect, one or more network protocols 710 are shown entering a control or communications component 720 that employs multiple communications stacks 730. This component 720 allows for multiple industrial Ethernet protocol stacks (or other communications stacks) to be represented in a unified communications component. In some cases, multiple non-industrial protocols such as FTP, Web Servers, SNMP, and so forth can be provided for. However, placing multiple industrial stacks 730 within the same component allows for a single module to communicate to various industrial Ethernet products, for example. For instance, one stack 730 could process Ethernet/IP protocol, another stack could process MODBUS TCP protocol, and yet another stack could process ProfiNet protocols. As can be appreciated, other protocols and stacks could be provided to facilitate communications in an industrial automation environment.

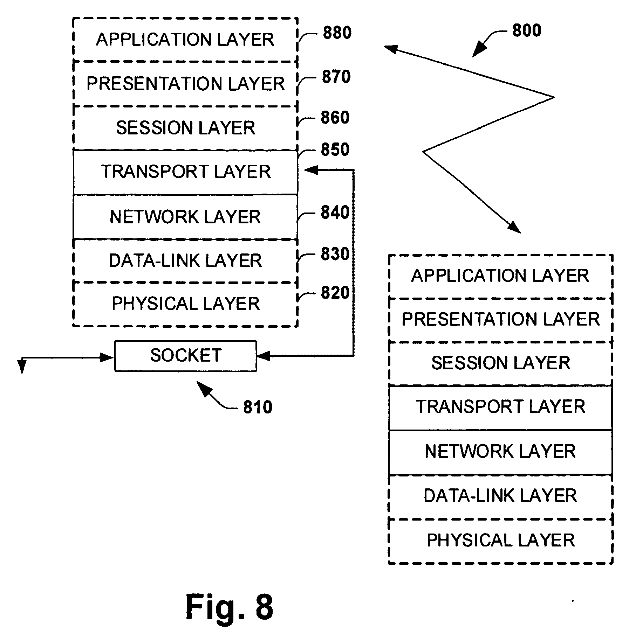

Fig. 8 illustrates multiple stack structures 800 for processing network communications and protocols. In this example, two stacks 800 are shown but other stacks could be provided to process additional protocols. Also, the stacks are shown having seven layers but more or less than seven can be provided having similar or differing layer functionality than shown. Additionally, one or more of the layers and/or associated functionality may be distributed between modules in a control and communications system. The stacks 800 may include a TCP/IP stack that can be associated with several layers. The layers transfer data to and from a network interfaces (not shown) that couples to a network. It is noted that logic from one or more of the layers may be incorporated within the network or control interface and that more than one socket 810 (or other interface) to the stack may be employed to communicate with various objects within a control system. For example, a stream socket may be employed that provides an end-to-end, connection-oriented link between two sockets utilizing TCP protocol. Another type socket is a datagram socket that is a connectionless service that utilizes User Datagram Protocol (UDP). UDP services are well suited to bursting traffic patterns and are employed to send control commands. UDP enables a plurality of systems to receive control commands in a more concurrent manner.

As described above, the stacks 800 may be associated with one or more other network layers. A physical layer 820 may be provided that defines the physical characteristics such as electrical properties of the network interface. A data-link layer 830 defines rules for sending information across a physical connection between systems. The stack may include a network layer 840, which may include Internet protocol (IP) and/or Internet Protocol version 6 (IPv6), which defines a protocol for opening and maintaining a path on the network. A transport layer 850 associated with the stack, may include Transmission Control Protocol (TCP) that provides a higher level of control for moving information between systems. This may include more sophisticated error handling, prioritization, and security features. A session layer 860, presentation layer 870, and application layer 880 may also be included that sit above the other layers in the stack.

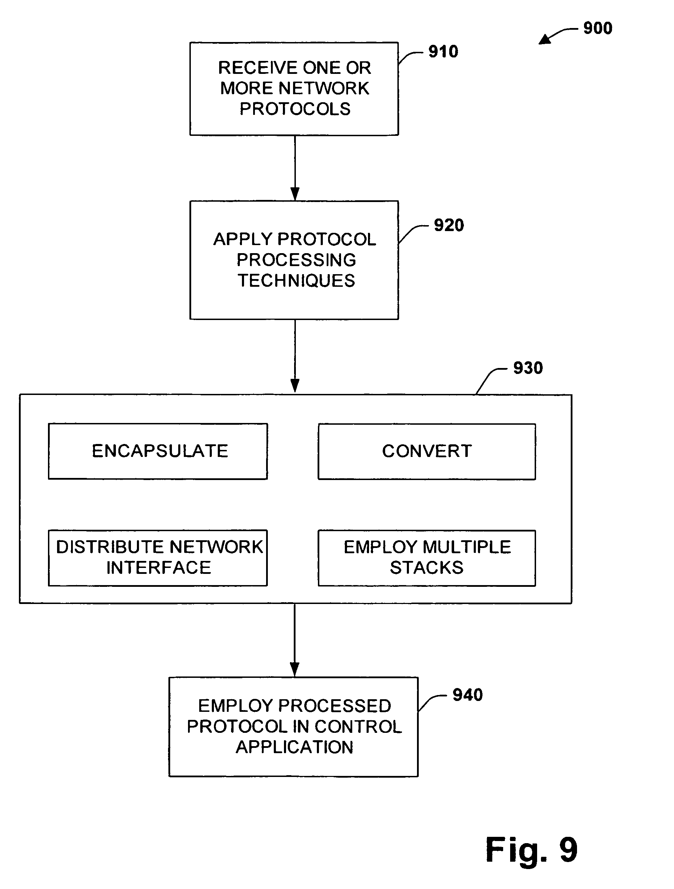

Fig. 9 illustrates a process 900 for handling multiple industrial protocols in an automation environment. While, for purposes of simplicity of explanation, the methodology is shown and described as a series of acts, it is to be understood and appreciated that the methodology is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

Fig. 9 illustrates an automated industrial communications process 900. Proceeding to 910, a one or more network protocols are received by a communications and/or control component so adapted for such communications. At 920, one or more network conversion techniques are applied to the received data to facilitate communications between one type of network protocol and a subsequent protocol. Such techniques are illustrated in more detail at 930 which depicts four possible data processing techniques that can be applied to handle multiple industrial communications protocol. In general, one processing technique at 930 includes encapsulation or de-capsulation to communicate data by wrapping or housing one industrial protocol within another industrial protocol. As noted above, a communication interface for the encapsulated protocol can remain similar in nature to existing interface designs in order to mitigate component re-designs, yet provide expanded services of the encapsulating protocol which can be combined with other communications infrastructure. For example, a MODBUS or ProfiBus protocol could be encapsulated within a Control and Information (CIP) protocol of DeviceNet protocol to facilitate communications between these differing network protocols.

Another type of processing at 930 can include distributing network layer functionality across one or more control module boundaries. For example, application layer objects that are suitable for a PLC can be implemented in the PLC or other network control module. A Network Services Layer can provide network layer communication primitives to the application objects as if a network protocol stack was implemented on the PLC or other communications module. As such, whether the stack is on the PLC or on an associated Network Interface Module, the stack is substantially transparent to the application layer which allows for sharing resources across modules. Another type of processing includes protocol conversion that maps protocol differences between network standards in a substantially transparent manner. This enables communications in one protocol to be mapped to a subsequent network or industrial protocol while mitigating design changes to existing industrial protocols.

In another conversion aspect at 930, multi-level communications processing can be provided for a given module, where multiple communications protocol stacks can be provided to enable modules to communicate to these various protocols such that a single module can provide network connectivity for multiple network protocols. After suitable protocol processing has occurred at 930, data from the processed protocols can be employed in a plurality of control applications at 940. For instance, control signals may be encapsulated or encoded in one protocol and subsequently decoded and employed over a different network protocol to control operations over a plurality of different network types and/or network components.

What has been described above includes various exemplary aspects. It is, of course, not possible to describe every conceivable combination of components or methodologies for purposes of describing these aspects, but one of ordinary skill in the art may recognize that many further combinations and permutations are possible. Accordingly, the aspects described herein are intended to embrace all such alterations, modifications and variations that fall within the scope of the appended claims.

In summary of the invention systems and methods are provided for communications across multiple networks in a substantially transparent and seamless manner. In one aspect, an industrial automation system is provided. The system includes a communications component to facilitate communications in an industrial controller network, where the communications component can include a protocol encapsulation component, a network services interface, or a protocol converter to process multiple network protocols. A controller component employs at least one network protocol to communicate with at least one other network protocol via the communications component. Also, the communications component can include multiple communications stacks to facilitate communications with the multiple network protocols.

## Claims

1. An industrial automation and communications system (100), comprising:
a communications component (130) that employs a first industrial protocol as a payload protocol to transport one or more unrelated industrial protocols, where the payload protocol and the one or more unrelated industrial protocols subscribe to an open industry standard;
a controller (400) that communicates to a network in accordance with the first industrial protocol and to at least one device in accordance with the one or more unrelated industrial protocols, wherein
the controller (400) comprises a programmable logic controller (410) associated with a network interface module (450),
wherein the network interface module comprises a network protocol stack (440), the stack further comprising at least one communications layer to process network protocols;
a network services interface (430) that is distributed across the programmable logic controller and the network interface module; wherein
the network services interface is adapted to communicate with the network protocol stack; and
communications through the network services interface is done across an industrial controller backplane (460) of the controller (400).

2. The system of claim 1, the communications component further comprising at least two communications stacks (800) to facilitate communications with one or more multiple network protocols.

3. The system of claim 1, the controller (400) is further associated with a communications module, an input module, or an output module.

4. The system of claim 1, further comprising at least one protocol encapsulation component transports data by wrapping at least one industrial protocol within at least one other unrelated industrial protocol.

5. The system of claim 4, further comprising a MODBUS protocol encapsulated within a Control and Information, CIP, protocol.

6. The system of claim 4, further comprising one or more intermediate processing nodes to process encapsulated protocol.

7. The system of claim 6, further comprising an end node to de-capsulate an inner protocol from an outer protocol and apply the inner protocol to a module.

8. The system of claim 1, the network services interface interacts with at least one application object (420) resident on a controller.

9. The system of claim 8, further comprising an application programming interface or remote procedure call to communicate with the network protocol stack.

10. The system of claims 1 to 9, further comprising at least one automation device 1. S component that maps between a first industrial protocol and a second unrelated industrial protocol.

11. The system of claim 10, the first industrial protocol is a MODBUS protocol and the second industrial protocol is a control and information protocol.

12. The system of claim 10 or 11, the automation device component further comprises a read coil or a write coil instruction.

13. The system of claim 10, 11 or 12, further comprising a register instruction or a function command.

14. The system of claims 1 to 13, further comprising at least three protocol stacks to process Ethernet/IP protocol, MODBUS TCP protocol, and Profinet protocol.

15. An industrial control communications method, comprising:
defining an industrial payload protocol;
defining an industrial control protocol which is disassociated from the industrial payload protocol;
transporting the industrial control protocol within the industrial payload protocol; and
communicating, by a controller (400), across a network with the industrial pay-load protocol to at least one device that employs the industrial control protocol;
distributing a network services interface (430) across a programmable logic controller (410) and a network interface module (450), wherein the network interface module comprises a network protocol stack (440), the stack further comprising at least one communications layer to process network protocols; wherein the network service interface is adapted to communicate with the network protocol stack; and
communicating through the network services interface across an industrial backplane (460) of the controller (400).

16. The method of claim 15, further comprising automatically switching between communications stacks.

17. The method of claim 15 or 16, further comprising transporting data by wrapping at least one industrial protocol within at least one another communications protocol.

18. The method of claim 17, further comprising wrapping a MODBUS protocol within a Control and Information, CIP, protocol.

19. The method of claims 5 to 18, further comprising automatically stripping an inner protocol from an outer protocol and applying the inner protocol to control a module.

20. The method of claims 15 to 19, further comprising employing an automation device component to map between a first industrial protocol and a second industrial protocol.

21. The method of claim 20, the automation device component maps at least one command for an input or an output module.

22. A computer readable storage medium comprising instructions adapted to cause the industrial system of claim 1 to 14 to perform the method of any one of claims 15 to 21 when said instructions are executed by a processor of said industrial system.

## Patentansprüche

1. Industrielles Automatisierungs- und Kommunikationssystem (100), umfassend:
eine Kommunikationskomponente (130), die ein erstes industrielles Protokoll als Nutzinformationsprotokoll zum Transport eines oder mehrerer nicht damit zusammenhängender industrieller Protokolle verwendet, wobei das Nutzinformationsprotokoll und das eine oder die mehreren nicht damit zusammenhängenden industriellen Protokolle einen offenen Industriestandard subskribieren;
eine Steuerung (400), die gemäß dem ersten industriellen Protokoll mit einem Netzwerk und gemäß dem einen oder den mehreren nicht damit zusammenhängenden industriellen Protokollen mit mindestens einer Einrichtung kommuniziert, wobei die Steuerung (400) eine mit einem Netzwerkschnittstellenmodul (450) assoziierte programmierbare logische Steuerung (410) umfasst,
wobei das Netzwerkschnittstellenmodul einen Netzwerkprotokollstapel (440) umfasst, wobei der Stapel ferner mindestens eine Kommunikationsschicht zum Verarbeiten von Netzwerkprotokollen umfasst;
eine Netzwerkdiensteschnittstelle (430), die über die programmierbare logische Steuerung und das Netzwerkschnittstellenmodul verteilt ist; wobei
die Netzwerkdiensteschnittstelle dafür ausgelegt ist, mit dem Netzwerkprotokollstapel zu kommunizieren; und
Kommunikation durch die Netzwerkdiensteschnittstelle über eine Backplane (460) industrieller Steuerungen der Steuerung (400) erfolgt.

2. System nach Anspruch 1, wobei die Kommunikationskomponente ferner mindestens zwei Kommunikationsstapel (800) zur Ermöglichung von Kommunikation mit einem oder mehreren Mehrfachnetzwerkprotokollen umfasst.

3. System nach Anspruch 1, wobei die Steuerung (400) ferner mit einem Kommunikationsmodul, einem Eingangsmodul oder einem Ausgangsmodul assoziiert ist.

4. System nach Anspruch 1, ferner umfassend: mindestens eine Protokolleinkapselungskomponente transportiert Daten durch Wrapping mindestens eines industriellen Protokolls in mindestens ein anderes nicht damit zusammenhängendes industrielles Protokoll.

5. System nach Anspruch 4, ferner umfassend ein in einem Protokoll von Control and Information CIP eingekapseltes MODBUS-Protokoll.

6. System nach Anspruch 4, ferner umfassend einen oder mehrere Zwischenverarbeitungsknoten zum Verarbeiten eines eingekapselten Protokolls.

7. System nach Anspruch 6, ferner umfassend einen Endknoten zum Entkapseln eines inneren Protokolls aus einem äußeren Protokoll und zum Anwenden des inneren Protokolls auf ein Modul.

8. System nach Anspruch 1, wobei die Netzwerkdiensteschnittstelle mit mindestens einem auf einer Steuerung residenten Anwendungsobjekt (420) in Wechselwirkung tritt.

9. System nach Anspruch 8, ferner umfassend eine Anwendungsprogrammierschnittstelle oder Remote Procedure Call zur Kommunikation mit dem Netzwerkprotokollstapel.

10. System nach Anspruch 1 bis 9, ferner umfassend mindestens eine Automatisierungseinrichtungskomponente, die zwischen einem ersten industriellen Protokoll und einem zweiten nicht damit zusammenhängenden industriellen Protokoll abbildet.

11. System nach Anspruch 10, wobei das erste industrielle Protokoll ein MODBUS-Protokoll und das zweite industrielle Protokoll ein Steuer- und Informationsprotokoll ist.

12. System nach Anspruch 10 oder 11, wobei die Automatisierungseinrichtungskomponente ferner eine Read-Coil- oder eine Write-Coil-Anweisung umfasst.

13. System nach Anspruch 10, 11 oder 12, ferner umfassend eine Registeranweisung oder einen Funktionsbefehl.

14. System nach Anspruch 1 bis 13, ferner umfassend mindestens drei Protokollstapel zum Verarbeiten des Ethernet/IP-Protokolls, des MODBUS-TCP-Protokolls und des Profinet-Protokolls.

15. Industrielles Steuerkommunikationsverfahren, mit den folgenden Schritten:
Definieren eines industriellen Nutzinformationsprotokolls;
Definieren eines industriellen Steuerprotokolls, das von dem industriellen Nutzinformationsprotokoll abgegrenzt ist;
Transportieren des industriellen Steuerprotokolls innerhalb des industriellen Nutzinformationsprotokolls; und
Kommunizieren durch eine Steuerung (400) über ein Netzwerk mit dem industriellen Nutzinformationsprotokoll mit mindestens einer Einrichtung, die das industrielle Steuerprotokoll verwendet;
Verteilen einer Netzwerkdiensteschnittstelle (430) über eine programmierbare logische Steuerung (410) und ein Netzwerkschnittstellenmodul (450), wobei das Netzwerkschnittstellenmodul einen Netzwerkprotokollstapel (440) umfasst, wobei der Stapel ferner mindestens eine Kommunikationsschicht zum Verarbeiten von Netzwerkprotokollen umfasst; wobei die Netzwerkdiensteschnittstelle dafür ausgelegt ist, mit dem Netzwerkprotokollstapel zu kommunizieren; und
Kommunizieren durch die Netzwerkdiensteschnittstelle über eine industrielle Backplane (460) der Steuerung (400).

16. Verfahren nach Anspruch 15, ferner mit dem Schritt des automatischen Wechselns zwischen Kommunikationsstapeln.

17. Verfahren nach Anspruch 15 oder 16, ferner mit dem Schritt des Transportierens von Daten durch Wrapping mindestens eines industriellen Protokolls in mindestens ein anderes Kommunikationsprotokoll.

18. Verfahren nach Anspruch 17, ferner mit dem Schritt des Wrapping eines MODBUS-Protokolls in ein Protokoll der Control and Information CIP.

19. Verfahren nach Anspruch 15 bis 18, ferner mit dem Schritt des automatischen Entfernens eines inneren Protokolls aus einem äußeren Protokoll und des Anwendens des inneren Protokolls zur Steuerung eines Moduls.

20. Verfahren nach Anspruch 15 bis 19, ferner mit dem Schritt des Verwendens einer Automatisierungseinrichtungskomponente zum Abbilden zwischen einem ersten industriellen Protokoll und einem zweiten industriellen Protokoll.

21. Verfahren nach Anspruch 20, wobei die Automatisierungseinrichtungskomponente mindestens einem Befehl für ein Eingangs- oder ein Ausgangsmodul abbildet.

22. Computerlesbares Speichermedium, das Anweisungen umfasst, die dafür ausgelegt sind, zu bewirken, dass das industrielle System nach Anspruch 1 bis 14 das Verfahren nach einem der Anspruch 15 bis 21 ausführt, wenn die Anweisungen durch einen Prozessor des industriellen Systems ausgeführt werden.

## Revendications

1. Système industriel d'automatisation et de communication (100), comprenant :
un composant de communication (130) qui utilise un premier protocole industriel comme protocole de charge utile pour transporter un ou plusieurs protocoles industriels sans rapport, où le protocole de charge utile et les un ou plusieurs protocoles industriels sans rapport font partie d'un standard ouvert de l'industrie,
un contrôleur (400) qui communique vers un réseau conforme au premier protocole industriel et vers au moins un dispositif conforme aux un ou plusieurs protocoles industriels sans rapport, dans lequel
le contrôleur (400) comprend un contrôleur logique programmable (410) associé à un module interface de réseau (450),
dans lequel le module interface de réseau comprend une pile de protocoles de réseau (440), la pile comprenant en outre au moins une couche de communication pour traiter des protocoles de réseau,
une interface de services de réseau (430) qui est répartie sur le contrôleur logique programmable et sur le module interface de réseau, dans lequel
l'interface de services de réseau est conçue pour communiquer avec la pile de protocoles de réseau, et
les communications au travers de l'interface de services de réseau sont réalisées par l'intermédiaire d'un fond de panier de contrôleur industriel (460) faisant partie du contrôleur (400).

2. Système selon la revendication 1, le composant de communication comprenant en outre au moins deux piles de communications (800) permettant de faciliter les communications avec un ou plusieurs protocoles multiples de réseau.

3. Système selon la revendication 1, dans lequel le contrôleur (400) est en outre associé à un module de communication, à un module d'entrée ou à un module de sortie.

4. Système selon la revendication 1, comprenant en outre au moins un composant d'encapsulation d'un protocole qui transporte des données en enveloppant au moins un protocole industriel dans au moins un autre protocole industriel sans rapport.

5. Système selon la revendication 4, comprenant en outre un protocole de type MODBUS encapsulé dans un protocole de commandes et d'informations, CIP.

6. Système selon la revendication 4, comprenant en outre un ou plusieurs noeuds intermédiaires de traitement permettant de traiter le protocole encapsulé.

7. Système selon la revendication 6, comprenant en outre un noeud d'extrémité permettant d'extraire d'un protocole externe l'encapsulation un protocole interne et d'appliquer le protocole interne à un module.

8. Système selon la revendication 1, dans lequel l'interface de services de réseau interagit avec au moins un objet d'application (420) résidant sur un contrôleur.

9. Système selon la revendication 8, comprenant en outre une interface de programmation d'application ou un appel à une procédure distante permettant de communiquer avec la pile de protocoles de réseau.

10. Système selon les revendications 1 à 9, comprenant en outre au moins un dispositif d'automatisation qui effectue un mappage entre un premier protocole industriel et un second protocole industriel sans rapport.

11. Système selon la revendication 10, dans lequel le premier protocole industriel est un protocole de type MODBUS et le second protocole industriel est un protocole de commandes et d'informations.

12. Système selon la revendication 10 ou 11, dans lequel le composant d'automatisation comprend en outre une instruction pour bobine de lecture ou pour bobine d'écriture.

13. Système selon la revendication 10, 11 ou 12, comprenant en outre une instruction pour registres ou une commande pour fonctions.

14. Système selon les revendications 1 à 13 comprenant en outre au moins trois piles de protocoles permettant de traiter le protocole Ethernet ou IP, le protocole TCP MODBUS et le protocole Profinet.

15. Procédé industriel de communication de commande, comprenant :
la définition d'un protocole industriel de charge utile,
la définition d'un protocole industriel de commande qui est dissocié du protocole industriel de charge utile,
le transport du protocole industriel de commande dans le protocole industriel de charge utile, et
la communication, grâce à un contrôleur (400), à travers un réseau avec le protocole industriel de charge utile vers au moins un dispositif qui utilise le protocole industriel de commande,
la répartition d'une interface de services de réseau (430) sur un contrôleur logique programmable (410) et sur un module interface de réseau (450), dans lequel le module interface de réseau comprend une pile de protocoles de réseau (440), la pile comprenant en outre au moins une couche de communication permettant de traiter des protocoles de réseau, dans lequel l'interface de services de réseau est conçue pour communiquer avec la pile de protocoles de réseau, et
la communication, au travers de l'interface de services de réseau par l'intermédiaire d'un fond de panier industriel (460) du contrôleur (400).

16. Procédé selon la revendication 15, comprenant en outre une commutation automatique entre les piles de communications.

17. Procédé selon la revendication 15 ou 16, comprenant en outre le transport de données en enveloppant au moins un protocole industriel à l'intérieur d'au moins un autre protocole de communication.

18. Procédé selon la revendication 17, comprenant en outre l'encapsulation du protocole de type MODBUS à l'intérieur d'un protocole de commandes et d'informations, CIP.

19. Protocole selon les revendications 15 à 18, comprenant en outre l'extraction automatique d'un protocole interne à partir d'un protocole externe et l'application du protocole interne afin de commander un module.

20. Procédé selon les revendications 15 à 19, comprenant en outre l'utilisation d'un dispositif d'automatisation pour effectuer une mappe entre un premier protocole industriel et un second protocole industriel.

21. Procédé selon la revendication 20, dans lequel le dispositif d'automatisation effectue la mappe d'au moins une commande pour un module d'entrée ou un module de sortie.

22. Support de stockage pouvant être lu par ordinateur comprenant des instructions conçues pour amener le système industriel des revendications 1 à 14 à réaliser le procédé de l'une quelconque des revendications 15 à 21 lorsque lesdites instructions sont exécutées par un processeur dudit système industriel.
